# EUROPÄISCHE PATENTSCHRIFT

(11) **EP 1 436 349 B1**
(45) Veröffentlichungstag und Bekanntmachung des Hinweises auf die Patenterteilung: **12.09.2007**
(21) Anmeldenummer: 02735408.3
(22) Anmeldetag: 06.06.2002
(51) Int. Cl.: C08K 7/22, C08K 7/28, C08J 3/20, C08G 18/08

(54) **VERFAHREN ZUR HERSTELLUNG VON SYNTAKTISCHEN POLYURETHANEN**
METHOD FOR PRODUCING SYNTACTIC POLYURETHANE
PROCEDE DE PRODUCTION DE POLYURETHANE SYNTACTIQUE

(30) Priorität: 19.06.2001 DE 10129232
(43) Veröffentlichungstag der Anmeldung: 14.07.2004
(73) Patentinhaber: BASF Aktiengesellschaft, 67056 Ludwigshafen (DE)
(72) Erfinder: HUNTEMANN, Peter, 49448 Stemshorn (DE)
(86) Internationale Anmeldenummer: PCT/EP2002/006195
(87) Internationale Veröffentlichungsnummer: WO 2002/102887

(56) Entgegenhaltungen:
- EP-A- 0 390 147
- WO-A-96/05338
- FR-A- 2 755 139

## Beschreibung

Die Erfindung betrifft ein Verfahren zur Herstellung von syntaktischen Polyurethanen durch Vermischen von Mikrohohlkugeln mit Polyurethanen, wobei in einem ersten Schritt die Polyurethansystemkomponenten zur Reaktion gebracht werden und in einem zweiten Schritt die Zufuhr der Mikrohohlkugeln in einer kontinuierlich arbeitenden Mischvorrichtung erfolgt.

Der Begriff syntaktische Kunststoffe umfasst im allgemeinen Kunststoffe, die Hohlfüllstoffe enthalten. Syntaktische Kunststoffe finden üblicherweise Verwendung als Isolierbeschichtungen, aufgrund ihrer vorteilhaften Druckfestigkeit und Temperaturbeständigkeit bevorzugt im Off-Shore Bereich. Ebenfalls sind Anwendungen als Brandschutzmaterial und als Schallisolationsmaterial bekannt.

WO 87/1070 beschreibt ein Wärmeisolationsmaterial, bestehend aus elastomeren Kunststoff, wie beispielsweise Kautschuk oder Styrolbutadien, als Matrix und Mikrohohlglaskugeln, wobei die Mikrohohlglaskugeln in einer Menge von 40 - 80 Vol.% eingearbeitet werden.

WO 99/3922 und EP-A-896 976 beschreiben syntaktische Polyurethane, die aus Polyurethan und Mikrohohlglaskugeln bestehen und bevorzugt als Isolierbeschichtung für Rohre im Off-Shore Bereich eingesetzt werden. Die Herstellung erfolgt durch Zugabe der Mikrohohlkugeln zu einer der Polyurethansystemkomponenten und anschließender Vermischung der Systemkomponenten.

DE-A-199 12 988 beschreibt die Herstellung von Mikrohohlglaskugeln enthaltende Polyurethanschäume und deren Verwendung als Brandschutzschäume. Auch hier werden die Mikrohohlkugeln zu einer der Systemkomponenten gegeben und diese dann anschließend, beispielsweise mittels eines statischen Mischers, vermischt.

Um gute Dämmeigenschaften eines Schaumsystems zu erhalten, ist es vorteilhaft, möglichst viele Mikrohohlkugeln in das System einzuarbeiten. Problematisch ist, dass hohe Füllstoffanteile zu Systemkomponenten mit hohen Viskositäten führen, die häufig thixotrop und unter Umständen nicht pumpfähig und somit auch schlecht vermischbar sind. Verstärkt wird diese Problematik dadurch, dass im Anwendungsbereich der Polyurethane üblicherweise der gesamte Füllstoffanteil in die Polyolkomponente gegeben werden muss, da die Glashohlkugeln im allgemeinen nicht mit dem Isocyanat verträglich sind, weil durch den Wassergehalt und/oder den Alkalianteil an der Oberfläche von Glas eine Beeinträchtigung der Qualität des Isocyanates erfolgt.

Die Verarbeitung der füllstoffhaltigen Polyolkomponente ist oft aufwendig, da in der Regel spezielle, empfindliche Schraubenspindelpumpen nötig sind, um die füllstoffhaltigen Komponenten zu fördern, da herkömmliche Zahnradpumpen die Mikrohohlkugeln zerstören würden. Ein weiteres Problem liegt in der Vermischung der sehr hochviskosen Komponenten. Hier ist eine Vermischung mit Hochdruckmischkammern nicht möglich, da die Hohlkugeln zerstört werden würden. Eine Vermischung mit Niederdruckmischkammern gestaltet sich schwierig, da sehr hohe Rührgeschwindigkeiten und komplizierte Rührergeometrien erforderlich sind. Auch hier werden immer Anteile der Kugeln wegen der auftretenden hohen Scherkräfte zerstört. Ein weiterer Nachteil der auftritt, wenn die Füllstoffe vor der Urethanreaktion der Polyol-Komponente zugegeben werden, ist, dass die Mikrohohlkugeln der Isocyanat-Polyol-Reaktion sprichwörtlich "räumlich im Wege stehen" und es daher zu unbefriedigenden Ergebnissen kommen kann.

Aufgabe der Erfindung war es daher, ein Verfahren bereit zu stellen, das es erlaubt, die Mikrohohlkugeln vorteilhaft mit dem Polyurethan zu vermischen. Hierbei ist wichtig, dass auch empfindliche Mikrohohlkugeln, wie Mikrohohlglaskugeln, einerseits in möglichst hohen Mengenkonzentrationen, andererseits aber mit möglichst geringen Bruchverlusten eingearbeitet werden können. Weiterhin soll auch bei möglichst wenig Bruchverlusten die Einarbeitungsgeschwindigkeit hoch sein. Ferner das soll Verfahren mit geringen technischen Aufwand realisierbar sein.

Die Aufgabe konnte durch ein Verfahren gelöst werden, wobei zuerst die Polyurethan-Systemkomponenten miteinander zur Reaktion gebracht werden und anschließend die Mikrohohlkugeln in einer kontinuierlichen geeigneten Mischvorrichtung zugemischt werden.

Gegenstand der Erfindung ist daher ein Verfahren zur Herstellung von syntaktischen Polyurethanen durch Vermischen von Mikrohohlkugeln mit Polyurethanen, herstellbar durch Umsetzung von
a) Polyisocyanaten mit
b) Verbindungen, die gegenüber Isocyanat mindestens zwei reaktive Wasserstoffatome aufweisen, gegebenenfalls in Gegenwart von
c) Katalysatoren,
d) Treibmitteln und
e) Zusatzstoffen,
dadurch gekennzeichnet, dass in einem ersten Schritt die Komponenten a) und b) und gegebenenfalls c) bis d) zur Reaktion gebracht werden und in einem zweiten Schritt die Zufuhr der Mikrohohlkugeln in einer, bevorzugt kontinuierlich arbeitenden, Mischvorrichtung erfolgt, wobei die Mischvorrichtung totraumfrei aufgebaut ist aus
i) einem Mischtopf
ii) einem Zulauf für Polyurethan
iii)einem Zulauf für Mikrohohlkugeln
iv) einem Rührorgan und
v) einer Austrittsöffnung.

Ferner ist Gegenstand der Erfindung die Verwendung einer, bevorzugt kontinuierlich arbeitenden, Mischvorrichtung, aufgebaut aus
i) einem Mischtopf
ii) einer Zulaufleitung für Polyurethan
iii)einer Zulaufleitung für Mikrohohlkugeln
iv) einem Rührorgan und
v) einer regelbaren Austrittsöffnung,
für die Herstellung von Mikrohohlkugeln enthaltendem Polyurethan.

Unter dem Begriff Mikrohohlkugel sind im Rahmen dieser Erfindung organische und mineralische Hohlkugeln zu verstehen. Als organische Hohlkugeln können beispielsweise Kunststoffhohlkugeln, z.B. aus Polyethylen, Polypropylen, Polyurethan, Polystyrol oder einen Gemisch daraus, eingesetzt werden. Die mineralische Hohlkugeln können beispielsweise Ton, Aluminiumsilikat, Glas oder Gemische daraus enthalten. Üblicherweise weisen die organischen oder mineralischen Hohlkugeln einen Durchmesser von 1 bis 1000 µm, bevorzugt von 5 bis 200 µm auf.

Die Hohlkugeln können im Inneren ein Vakuum oder Teilvakuum aufweisen oder mit Luft, Inertgasen, beispielsweise Stickstoff, Helium oder Argon, oder Reaktivgasen, beispielsweise Sauerstoff, gefüllt sein.

Bevorzugt werden als Mikrohohlkugeln Mikroglashohlkugeln verwendet. In einer besonders bevorzugten Ausführungsform weisen die Mikroglashohlkugeln eine Druckfestigkeit von mindestens 50 bar auf. Beispielsweise können als Mikrohohlglaskugeln 3M - Scotchlite^{®} Glass Bubbles verwendet werden.

Im Rahmen dieser Erfindung umfasst der Begriff Polyurethane alle Polyisocyanat-Polyadditionsprodukte, die durch Reaktion der Komponenten a) und b) und gegebenenfalls c) bis e) erhältlich sind, beispielsweise Polyurethanhartschäume, Polyurethanweichschäume, Polyurethanintegralschäume, kompakte Polyurethane, elastomere Polyurethane oder Polyurethanharnstoffe und/oder thermoplastisches Polyurethan.

Für die einzelnen Komponenten a) bis e) gilt folgendes:

Die verwendeten Polyisocyanate a) umfassen die aus dem Stand der Technik bekannten aliphatischen, cycloaliphatischen und aromatischen Isocyanate. Beispiele sind 4,4'-Diphenylmethandiisocyanat, die Mischungen aus monomeren Diphenylmethandiisocyanaten und höherkernigen Homologen des Diphenylmethandiisocyanats (Roh- bzw. Polymer-MDI), Tetramethylendiisocyanat, Tetramethylendiisocyanat-Trimere, Hexamethylendiisocyanat (HDI), 1,4-Phenylendiisocyanat, Hexamethylendiisocyanat-Trimere, Naphtylendiisocyanat (NDI), Isophorondiisocyanat-Trimere, 4,4'-Methylenbis(cyclohexyl)-diisocyanat, Xylylendiisocyanat, Tetramethylxylylendiisocyanat, Dodecyldiisocyanat, Lysinalkylester-diisocyanat, wobei Alkyl für C₁ bis C₁₀ steht, 2,2,4- oder 2,4,4-Trimethyl-1,6-hexamethylen-diisocyanat, 1,4-Diisocyanatocyclohexan, und Polyisocyanate mit NCO-Gruppen unterschiedlicher Reaktivität, wie 2,4-Toluylendiisocyanat (2,4-TDI), 2,4'-Diphenylmethandiisocyanat (2,4'-MDI), Triisocyanatotoluol, Isophorondiisocyanat (IPDI), 2,4'-Methylenbis(cyclohexyl)diisocyanat und 4-Methyl-cyclohexan-1,3-diisocyanat (H-TDI). Bevorzugt verwendet wird MDI. Als Polyisocyanate können auch Mischungen der vorstehend genannten Isocyanate verwendet werden.

Als Verbindungen mit mindestens zwei gegenüber Isocyanatgruppen reaktiven Wasserstoffatomen b) kommen Verbindungen in Frage, die zwei oder mehr reaktive Gruppen, ausgewählt aus OH-Gruppen, SH-Gruppen, NH-Gruppen, NH₂-Gruppen und CH-aciden Gruppen, wie z.B. β-Diketo-Gruppen, im Molekül tragen.

Zweckmäßigerweise werden solche mit einer Funktionalität von 2 bis 8, vorzugsweise 2 bis 6, und einem Molekulargewicht von 300 bis 8000, vorzugsweise von 400 bis 4000 verwendet. Bewährt haben sich z.B. Polyether-polyamine und/oder vorzugsweise Polyole, ausgewählt aus der Gruppe der Polyether-polyole, Polyester-polyole, Polythioether-polyole, Polyesteramide, hydroxylgruppenhaltigen Polyacetale und hydroxylgruppenhaltigen aliphatischen Polycarbonate oder Mischungen aus mindestens zwei der genannten Polyole. Vorzugsweise Anwendung finden Polyester-polyole und/oder Polyether-polyole. Die Hydroxylzahl der Polyhydroxylverbindungen beträgt dabei in aller Regel 10 bis 1000 und vorzugsweise 20 bis 300.

Alle Molekulargewichtsangaben in dieser Patentanmeldung weisen die Einheit g/mol auf. Sofern es sich um makromolekulare Stoffe handelt beziehen sich die Angaben auf das zahlenmittlere Molekulargewicht.

In einer bevorzugten Ausführungsform sind Verbindungen b) Polyetherpolyole. Sie werden nach bekannten Verfahren, beispielsweise durch anionische Polymerisation mit Alkalihydroxiden oder Alkalialkoholaten als Katalysatoren oder mit Hilfe von Doppelmetallcyanidkatalysatoren und unter Zusatz mindestens eines Startermoleküls, das 2 bis 3 reaktive Wasserstoffatome gebunden enthält, aus einem oder mehreren Alkylenoxiden mit 2 bis 4 Kohlenstoffatomen im Alkylenrest hergestellt. Geeignete Alkylenoxide sind beispielsweise Tetrahydrofuran, Ethylenoxid und 1,2-Propylenoxid. Die Alkylenoxide können einzeln, alternierend nacheinander oder als Mischungen verwendet werden. Bevorzugt werden Mischungen aus 1,2-Propylenoxid und Ethylenoxid, wobei bevorzugt Ethylenoxid in Mengen von 10 bis 50 % als Ethylenoxid-Endblock eingesetzt wird ("EO-cap"), so dass die entstehenden Polyole zu über 70 % primäre OH-Endgruppen aufweisen.

Als Startermolekül kommen Wasser oder 2- und 3-wertige Alkohole in Betracht, wie Ethylenglykol, Propandiol-1,2 und -1,3, Diethylenglykol, Dipropylenglykol, Butandiol-1,4, Glycerin und/ oder Trimethylolpropan. Die Polyetherpolyole, vorzugsweise Polyoxypropylen-polyoxyethylen-polyole, besitzen eine Funktionalität von 2 bis 3 und Molekulargewichte von 1.000 bis 8.000, vorzugsweise 2.000 bis 7.000.

Als Polyetherole eignen sich ferner polymermodifizierte Polyetherpolyole, vorzugsweise Pfropfpolyetherpolyole, insbesondere solche auf Styrol- und/oder Acrylnitrilbasis, die durch in situ Polymerisation von Acrylnitril, Styrol oder vorzugsweise Mischungen aus Styrol und Acrylnitril, hergestellt werden.

Weiterhin geeignet sind Polyesterpolyole. Diese können beispielsweise aus organischen Dicarbonsäuren mit 2 bis 12 Kohlenstoffatomen, vorzugsweise aliphatischen Dicarbonsäuren mit 4 bis 6 Kohlenstoffatomen, und mehrwertigen Alkoholen, vorzugsweise Diolen, mit 2 bis 12 Kohlenstoffatomen, vorzugsweise 2 bis 6 Kohlenstoffatomen hergestellt werden. Ebenfalls können Mischsysteme, die sowohl Polyesterole als auch Polyetherole enthalten, verwendet werden.

Ferner umfasst die Komponente b) übliche, aus dem Stand der Technik bekannte Kettenverlängerungsmittel. Diese können sowohl als Kettenverlängerungsmittel aber auch als Vernetzungsmittel fungieren und umfassen niedermolekulare, mehrwertige Alkohole, vorzugsweise Diole und/oder Triole, mit Molekulargewichten kleiner als 399, bevorzugt von 60 bis 300, besonders bevorzugt von 60 bis 200. In Betracht kommen beispielsweise Ethylenglykol, Propandiol, Butandiol, Trimethylolethan, Glycerin und Trimethylolpropan. Bevorzugt verwendet werden Diole und deren Mischungen.

Als Katalysatoren c) können übliche Verbindungen eingesetzt werden, die die Reaktion der Komponente a) mit der Komponente b) beschleunigen. In Frage kommen beispielsweise tertiäre Amine und/ oder organische Metallverbindungen. Beispielsweise können als Katalysatoren folgende Verbindungen eingesetzt werden: Triethylendiamin, Aminoalkyl- und/oder Aminophenyl-imidazole, z.B. 4-Chlor-2,5-dimethyl-1-[2-(N-methylamino)ethyl]-imidazol, 2-Aminopropyl-4,5-dimethoxy-1-methylimidazol, 1-(3-Aminopropyl)-2,4,5-tributylimidazol, 1-Aminoethyl-4-hexylimidazol, 1-Aminobutyl-2,5-dimethylimidazol, 1-(3-Aminopropyl)-2-ethyl-4-methylimidazol, 1-(3-Aminopropyl)imidazol und/oder 1-(3-Aminopropyl)-2-methylimidazol, Zinn-(II)salze von organischen Carbonsäuren, z.B. Zinn-(II)-diacetat, Zinn-(II)-dioctoat, Zinn-(II)-diethylhexoat und Zinn-(II)-dilaurat und Dialkylzinn-(IV)-salzen von organischen Carbonsäuren, z.B. Dibutyl-zinndiacetat, Dibutylzinn-dilaurat, Dibutylzinn-maleat und Dioctylzinn-diacetat. Im allgemeinen verwendet man 0,01 bis 10 Gew.%, bevorzugt 0,1 bis 5 Gew.%, besonders bevorzugt 0,5 bis 4 Gew.% Katalysator c), bezogen auf das Gewicht der Komponenten a) und b).

Falls die Herstellung von zellförmigen Polyisocyanat-Polyadditionsprodukten gewünscht ist, so ist der Einsatz von Treibmitteln notwendig. Als Treibmittel d) findet vorzugsweise Wasser Verwendung. Da die Komponenten b) aufgrund der Herstellung und/oder chemischen Zusammensetzung Wasser aufweisen kann, bedarf es in manchen Fällen keiner separaten Wasserzugabe zu der Reaktionsmischung. Sofern der Polyurethan-Formulierung zur Erzielung des gewünschten Raumgewichts zusätzlich Wasser zugesetzt werden muss, wird dieses üblicherweise in Mengen von 0,05 bis 4,0 Gew.-%, vorzugsweise von 0,1 bis 3,0 Gew.-% und insbesondere von 0,3 bis 2,5 Gew.-%, bezogen auf das Gewicht der Komponenten a) und b) und gegebenenfalls c) bis e), verwendet.

Als Treibmittel d) können anstelle von Wasser oder vorzugsweise in Kombination mit Wasser auch niedrigsiedende Flüssigkeiten, die unter dem Einfluss der exothermen Polyadditionsreaktion verdampfen und vorteilhafterweise einen Siedepunkt unter Normaldruck im Bereich von -40 bis 120°C, vorzugsweise von 10 bis 90°C, besitzen oder Gase eingesetzt werden. Die als Treibmittel geeigneten Flüssigkeiten der oben genannten Art und Gase können z.B. ausgewählt werden aus der Gruppe der Alkane wie z.B. Propan, n- und iso-Butan, n- und iso-Pentan und vorzugsweise der technischen Pentangemische, Cycloalkane und Cycloalkene wie z.B. Cyclobutan, Cyclopenten, Cyclohexen und vorzugsweise Cyclopentan und/oder Cyclohexan und Gase, wie z.B. Stickstoff, Kohlenmonoxid und Edelgase wie z.B. Helium, Neon und Krypton. Als Treibmittel geeignet sind ferner Salze, die sich thermisch zersetzen, wie z.B. Ammoniumbicarbonat und/oder Ammoniumcarbamat.

Gegebenenfalls können bei dem erfindungsgemäßen Verfahren Zusatzstoffe e) zugesetzt werden. Hier seien beispielsweise oberflächenaktive Substanzen, Schaumstabilisatoren, Zellregler, äußere und innere Trennmittel, Füll- und Verstärkungsstoffe, wie beispielsweise Glasfasern, Farbstoffe, Pigmente, Flammschutzmittel, Hydrolyseschutzstabilisatoren, Oxidationsschutzmittel, Abriebverbesserer, fungistatisch und bakteriostatisch wirkende Substanzen genannt.

Weitere Angaben über die verwendeten Ausgangsstoffe finden sich beispielsweise im Kunststoffhandbuch, Band 7, "Polyurethane", herausgegeben von Günter Oertel, Carl-Hanser-Verlag, München, 3. Auflage, 1993.

Zur Herstellung der Polyurethane werden die Polyisocyanate a) mit Verbindungen mit mindestens zwei gegenüber Isocyanat reaktiven Wasserstoffatomen b) und gegebenenfalls in Gegenwart der Komponenten c) bis e) in solchen Mengen zur Umsetzung gebracht, dass das Äquivalenzverhältnis von NCO-Gruppen der Polyisocyanate a)zur Summe der reaktiven Wasserstoffatome der Komponenten b) 1 : 0,5 bis 1 : 3,50 (entsprechend einem Isocyanatindex von 50 bis 350), vorzugsweise 1 : 0,65 bis 1 : 1,30 und besonders bevorzugt von 1 : 0,9 bis 1 : 1,15 beträgt.

Die Polyurethane werden üblicherweise nach dem bekannten Oneshot- oder dem ebenfalls bekannten Prepolymerverfahren hergestellt. Bei dem bevorzugten Prepolymerverfahren wird in einem ersten Schritt üblicherweise aus a) und b) ein Prepolymer hergestellt, bevorzugt ein isocyanatgruppenhaltiges Prepolymer, das anschließend mit weiterem b) zu den gewünschten Produkten umgesetzt wird.

Die Ausgangskomponenten werden üblicherweise bei einer Temperatur von 0°C bis 100°C, bevorzugt 15 bis 30°C gemischt und zur Reaktion gebracht. Die Vermischung kann mit den üblichen PUR-Verarbeitungsmaschinen erfolgen. In einer bevorzugten Ausführungsform erfolgt die Vermischung durch Niederdruckmaschinen oder Hochdruckmaschinen. Nach erfolgter Vermischung wird das Gemisch in den Mischtopf überführt. In einer bevorzugten Ausführungsform erfolgt das vermischende Einspritzen der Polyurethankomponenten direkt in den Mischtopf.

Nachdem die Komponenten a) und b) und gegebenenfalls c) bis e) zur Reaktion gebracht wurden, werden dem Polyurethangemisch die Mikrohohlkugeln zugemischt.

Die Mikrohohlkugeln werden im allgemeinen in einer Menge von 1 bis 80 Gew.%, bevorzugt von 2 bis 50, mehr bevorzugt von 5 bis 35 Gew.% und besonders bevorzugt von 10 bis 30 Gew.%, bezogen auf das Gesamtgewicht des resultierenden syntaktischen Polyurethans, zugegeben.

Die Zugabe der Mikrohohlkugeln erfolgt in einer bevorzugt kontinuierlich arbeitenden Mischvorrichtung, aufgebaut aus
i) einem Mischtopf
ii) einer Zulaufleitung für Polyurethan
iii)einer Zulaufleitung für Mikrohohlkugeln
iv) einem Rührorgan und
v) einer Austrittsöffnung, die bevorzugt regelbar ist.

Als Mischtopf i) können übliche Reaktionsgefäße, beispielsweise aus Stahl, Glas oder Kunststoff, wie z.B. Epoxyharz, dienen. Bevorzugt ist der Mischtopf trichterförmig aufgebaut, wobei die Austrittsöffnung v) sich am Trichterhals befindet. Bevorzugt wird dieser Trichter vertikal angeordnet. Die Größe des Mischtopfes hängt von dem Maßstab ab, in dem das erfindungsgemäße Verfahren durchgeführt werden soll, im allgemeinen kann der Mischtopf vom Mikromaßstab, d.h. beispielsweise umfassend ein Volumen von einigen cm³, bis zum Makromaßstab, d.h. umfassend ein Volumen bis zu einigen m³, betrieben werden.

An den Mischtopf führen die Zuläufe ii) und iii) von Polyurethan und Mikrohohlkugeln. In einer bevorzugten Ausführungsform sind die Mengen an Zulauf getrennt voneinander regelbar. Die Dosierung des Zulaufs an Polyurethan kann beispielsweise durch eine PUR-Dosiermaschine erfolgen, die Dosierung des Zulaufs an Mikrohohlkugeln kann beispielsweise durch ein Schneckendosiergerät erfolgen.

Die Mischvorrichtung ist mit einem Rührorgan ausgestattet. Dieses Rührorgan sorgt einerseits für die Vermischung des Polyurethans mit dem Mikrohohlkugeln, andererseits für einen konstanten Transport des Gemisches innerhalb des Mischtopfes von den Zuläufen zu der Austrittsöffnung. Hierfür sind im allgemeinen übliche Rührer, wie beispielsweise Scheibenrüher oder Flügelrührer geeignet. Wichtig ist, dass das Rührorgan so justiert wird, dass das Rühren totraumfrei erfolgt. Unterschiedliche Rührergrößen und -geometrien ermöglichen eine optimale Anpassung an die für unterschiedliche Viskositäten und Durchsätze erforderlichen Mischanforderungen.

Weiterhin ist es wichtig, dass das Rührorgan so justiert und mit einer Geschwindigkeit betrieben wird, so dass möglichst keine Beschädigung der Mikrohohlkugeln auftritt. Üblicherweise wird mit einer Rührgeschwindigkeit von 100 bis 5000 Upm, bevorzugt von 500 bis 1500 Upm, besonders bevorzugt von 700 bis 1000 Upm gearbeitet.

Werden beispielsweise Mikrohohlglaskugeln verwendet, so liegt im allgemeinen der Anteil an beschädigten Mikrohohlglaskugeln nach der Einarbeitung unter 40 Gew.%, bevorzugt unter 10 Gew.%, mehr bevorzugt unter 5 Gew.%, besonders bevorzugt unter 2 Gew.% und insbesondere unter 1 Gew.%, bezogen auf das Gesamtgewicht der verwendeten Mikrohohlglaskugeln. Der Anteil kann gegebenenfalls je nach Dichte der eingesetzten Hohlkugeln variieren.

Der Austritt des syntaktischen Polyurethans erfolgt an der Austrittsöffnung v). Die Austrittsöffnung ist regelbar. In einer besonders bevorzugten Ausführungsform erfolgt die Regelung durch einen kegelförmigen Verschluss, der in vertikaler Richtung zur Austrittsöffnung bewegt werden kann. Durch komplettes Absenken des Kegels kann die Austrittsöffnung ganz verschlossen werden, durch weites Anheben kann sie ganz geöffnet werden. Auf diesem Weg ist eine Dosierung des austretenden Produkts möglich. In einer bevorzugten Ausführungsform ist dieser kegelförmige Verschluss am Rührorgan integriert. Andere Regelvorrichtungen, die den gewünschten Steuerungseffekt bewirken, sind jedoch auch möglich.

Durch entsprechende Dosierung der Zuläufe und des Ablaufs an Produkt kann die durchschnittliche Verweildauer von Polyurethan und Mikrohohlkugeln in der Mischvorrichtung geregelt werden. Im allgemeinen hängt diese von der Art des herzustellenden syntaktischen Polyurethans ab und beträgt in der Regel zwischen 0,1 und 10 Minuten, bevorzugt zwischen 1 und 5 Minuten.

Es ist ferner vorteilhaft, die Umsetzung und die Vermischung so zu steuern, dass das unmittelbar an der Austrittsöffnung austretende syntaktische Polyurethan eine Viskosität von 1000 bis 30.000 mPas aufweist, wobei die Viskosität bei Raumtemperatur (25°C) mit einem Rotationsviskosimeter mit Kegel-Platte Geometrie bestimmt wurde.

Als Parameter für eine optimale Verweilzeit im Mischtopf kann auch die permanente Erfassung der Auslauftemperatur dienen.

Eine Auslauftemperatur von 20°C bis 100°C, bevorzugt 30°C bis 80°C, besonders bevorzugt 40°C bis 50°C, sichert eine ausreichende "offene Zeit" (bis das Material fest ist) und verhindert eine zu starke exotherme Reaktion, was ein "Festwerden" des syntaktischen Polyurethans bereits im Mischtopf zur Folge haben und damit den Abbruch des Herstellungsprozesses nach sich ziehen würde.

Die Steuerung des Prozesses ist auf diese Weise ohne erheblichen technischen Aufwand für den Fachmann durchführbar.

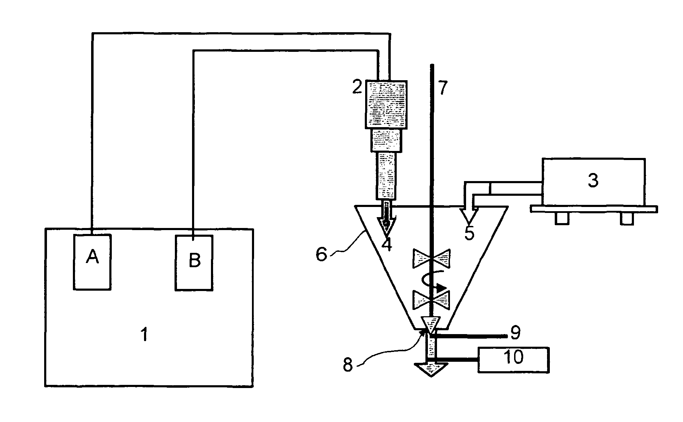

In Figur 1 ist eine bevorzugte Ausführungsform des erfindungsgemäßen Verfahren veranschaulicht. In Figur 1 bedeutet:
1 Vorlage für Polyolkomponente A und Isocyanatkomponente B
2 Mischkopf
3 Dosiergerät für Mikrohohlkugeln
4 Zulauf Polyurethan
5 Zulauf Mikrohohlkugeln
6 Mischtopf
7 Rührer
8 Austrittsöffnung und Kegelverschluss
9 Produktablauf
10 Temperaturfühler

Die Erfindung soll durch folgendes Beispiel veranschaulicht werden.

### Beispiel:

### Herstellung von syntaktischen Polyurethanen :

Ein Polyurethansystem (aufgebaut aus einer Polyolkomponente aus einem im wesentlichen wasserfreien Polyetherpolyol mit einer mittleren OH-Zahl von 250 und einer Isocyanatkomponente aus einem Polymer-MDI mit einem NCO-Gehalt von 31%) wurde bei einem NCO-Index von 60 über eine Niederdruckschäummaschine (Fa. Elastogran Maschinenbau, Typ F 20) als Dosieraggregat in einen 5 Liter fassenden Mischtopf aus Polyethylen gegeben.

Der Mischtopf war mit einer Kombination von Scheibenrührern der Firma Vollrath mit einem Rührscheibendurchmesser von 65 mm, 90 mm und zweimal 120 mm ausgestattet.

Die Starttemperatur des Polyurethansystems betrug 25°C. Die Verweilzeit im Mischtopf wurde so eingestellt, das eine Reaktionstemperatur an der Austrittsöffnung von 50°C nicht überschritten wurde. Der Durchsatz von des Polyurethansystems wurde auf 75 Gramm/Sekunde eingestellt. Die Austrittsgeschwindigkeit aus dem Mischtopf wurde durch einen kegelförmigen Verschluss geregelt.

Dem Mischtopf wurden mittels eines Schneckenfördergerätes Mikrohohlglaskugeln mit einem Durchmesser von durchschnittlich 40 µm (Scotchlite^{®} Glass Bubbles) zugegeben. Der Durchsatz an Mikrohohlglaskugeln betrug 28,1 Gramm/Sekunde. Die Viskosität der erhaltenen syntaktischen Polyurethane an der Austrittsöffnung betrug zwischen 6000 und 8000 mPas.

Der Gesamtdurchsatz an Polyurethan und Mikrohohlglaskugeln betrug 103,1 Gramm/Sekunde.

Die erhaltenen syntaktische Polyurethane weisen einen hohen Anteil an Mikrohohlkugeln auf, wobei diese in der Polyurethanmatrix in der Polyurethanmatrix äußert homogen verteilt sind. Der Anteil an zerbrochenen Glaskugeln war vernachlässigbar gering.

Das Beispiel zeigt, dass es das erfindungsgemäße Verfahren ermöglicht, mit geringen apparativen Aufwand eine hohe Mengenkonzentration an Mikrohohlkugeln ohne Bruchverluste bei in eine vorgemischte Polyurethanmatrix vorteilhaft einzuarbeiten.

## Patentansprüche

1. Verfahren zur Herstellung von syntaktischen Polyurethanen durch Vermischen von Mikrohohlkugeln mit Polyurethanen, herstellbar durch Umsetzung von
a) Polyisocyanaten mit
b) Verbindungen, die gegenüber Isocyanat mindestens zwei reaktive Wasserstoffatome aufweisen, gegebenenfalls in Gegenwart von
c) Katalysatoren,
d) Treibmitteln und
e) Zusatzstoffen,
**dadurch gekennzeichnet, dass** in einem ersten Schritt die Komponenten a) und b) und gegebenenfalls c) bis d) zur Reaktion gebracht werden und in einem zweiten Schritt die Zufuhr der Mikröhohlkugeln in einer Mischvorrichtung erfolgt, wobei die Mischvorrichtung totraumfrei aufgebaut ist aus
i) einem Mischtopf
ii) einem Zulauf für Polyurethan
iii) einem Zulauf für Mikrohohlkugeln
iv) einem Rührorgan und
v) einer regelbaren Austrittsöffnung.

2. Verfahren nach Anspruch 1, **dadurch gekennzeichnet, dass** das Vermischen der Komponenten a) und b) und gegebenenfalls c) bis d) in einem Hochdruck- oder Niederdruckmischkopf erfolgt.

3. Verfahren nach Anspruch 1 oder 2, **dadurch gekennzeichnet, dass** der Mischtopf i) eine trichterförmige Bauweise umfasst, wobei die Austrittsöffnung v) sich am Trichterhals befindet.

4. Verfahren nach einem der Ansprüche 1 bis 3, **dadurch gekennzeichnet, dass** die Größe der Austrittsöffnung durch einen kegelförmigen Verschluss, der in zur Austrittsöffnung vertikaler Richtung bewegbar ist, geregelt wird.

5. Verfahren nach einem der Ansprüche 1 bis 4, **dadurch gekennzeichnet, dass** das syntaktische Polyurethan einen Gehalt an Mikrohohlkugeln von 1 bis 80 Gew.-%, bezogen auf das Gesamtgewicht des syntaktischen Polyurethans, aufweist.

6. Verfahren nach einem der Ansprüche 1 bis 5, **dadurch gekennzeichnet, dass** die mittlere Verweildauer des Gemisches aus Polyurethan und Mikrohohlkugeln im Mischtopf i) 0,1 bis 10 Minuten beträgt.

7. Verfahren nach einem der Ansprüche 1 bis 6, **dadurch gekennzeichnet, dass** das syntaktische Polyurethan an der Austrittsöffnung eine Viskosität von 1000 bis 30000 mPas aufweist.

8. Verwendung einer totraumfrei aufgebauten Mischvorrichtung, aufgebaut aus
i) einem Mischtopf
ii) einem Zulauf für Polyurethan
iii) einem Zulauf für Mikrohohlkugeln
iv) einem Rührorgan und
v) einer regelbaren Austrittsöffnung,
für die Herstellung von Mikrohohlkugeln enthaltendem Polyurethan.

## Claims

1. A process for the preparation of syntactic polyurethanes by mixing hollow microspheres with polyurethanes preparable by reacting
a) polyisocyanates with
b) compounds which have at least two hydrogen atoms reactive toward isocyanate, if appropriate in the presence of
c) catalysts,
d) blowing agents and
e) additives,
wherein, in a first step, the components a) and b) and, if appropriate, c) to d) are reacted and, in a second step, the feeding of the hollow microspheres is effected in a mixing apparatus, the mixing apparatus being free of dead space and comprising
i) a mixing pot,
ii) a feed for polyurethane,
iii)a feed for hollow microspheres,
iv) a stirring element and
v) a regulatable outlet orifice.

2. The process according to claim 1, wherein the mixing of the components a) and b) and, if appropriate, c) to d) is effected in a high-pressure or low-pressure mixing head.

3. The process according to claim 1 or 2, wherein the mixing pot i) comprises a funnel-like design, the outlet orifice v) being present in the neck of the funnel.

4. The process according to any of claims 1 to 3, wherein the size of the outlet orifice is regulated by a conical closure which is movable in a vertical direction relative to the outlet orifice.

5. The process according to any of claims 1 to 4, wherein the syntactic polyurethane has a content of hollow microspheres of from 1 to 80% by weight, based on the total weight of the syntactic polyurethane.

6. The process according to any of claims 1 to 5, wherein the average residence time of the mixture of polyurethane and hollow microspheres in the mixing pot i) is from 0.1 to 10 minutes.

7. The process according to any of claims 1 to 6, wherein the syntactic polyurethane at the outlet orifice has a viscosity of from 1 000 to 30 000 mPa.s.

8. The use of a mixing apparatus which is free of dead space and comprises
i) a mixing pot,
ii) a feed for polyurethane,
iii)a feed for hollow microspheres,
iv) a stirring element and
v) a regulatable outlet orifice
for the preparation of polyurethane comprising hollow microspheres.

## Revendications

1. Procédé de préparation de polyuréthanes syntactiques par mélange de microbilles creuses avec des polyuréthanes qui peuvent être préparés en faisant réagir :
a) des polyisocyanates avec
b) des composés portant au moins deux atomes d'hydrogène réactifs vis-à-vis de l'isocyanate, facultativement en présence :
c) de catalyseurs,
d) d'agents de soufflage et
e) d'additifs,
**caractérisé en ce que**, dans une première étape, on provoque une réaction des composants a) et b) et, facultativement c) à d) et, dans une seconde étape, la formation des microbilles creuses se produit dans un appareil de mélange, l'appareil de mélange étant constitué, sans zone morte :
i) d'un creuset de mélange,
ii) d'un conduit d'amenée pour le polyuréthane,
iii) d'un conduit d'amenée pour les microbilles creuses,
iv) d'un organe d'agitation et
v) d'un orifice de sortie.

2. Procédé selon la revendication 1, **caractérisé en ce que** le mélange des composants a) et b) et, facultativement c) à d), est effectué dans une tête de mélange à haute pression ou à basse pression.

3. Procédé selon la revendication 1 ou 2, **caractérisé en ce que** le creuset de mélange i) comprend un montage du type entonnoir, l'orifice de sortie v) étant disposé au niveau du col de l'entonnoir.

4. Procédé selon l'une quelconque des revendications 1 à 3, **caractérisé en ce que** la taille de l'orifice de sortie est ajustée par une fermeture conique qui est déplaçable dans une direction verticale par rapport à l'orifice de sortie.

5. Procédé selon l'une quelconque des revendications 1 à 4, **caractérisé en ce que** le polyuréthane syntactique a une teneur en microbilles creuses de 1 à 80 % en poids sur la base du poids total du polyuréthane syntactique.

6. Procédé selon l'une quelconque des revendications 1 à 5, **caractérisé en ce que** la durée moyenne de résidence du mélange de polyuréthane et de microbilles creuses dans le creuset de mélange i) est de 0,1 à 10 minutes.

7. Procédé selon l'une quelconque des revendications 1 à 6, **caractérisé en ce que** le polyuréthane syntactique au niveau de l'orifice de sortie présente une viscosité de 1 000 à 30 000 mPas.

8. Utilisation d'un appareil de mélange constitué, sans zone morte :
i) d'un creuset de mélange,
ii) d'un conduit d'amenée pour le polyuréthane,
iii)d'un conduit d'amenée pour les microbilles creuses,
iv) d'un organe d'agitation et
v) d'un orifice de sortie
pour la préparation de polyuréthane contenant des microbilles creuses.
